# EUROPEAN PATENT APPLICATION

(11) **EP 4 791 109 A1**
(43) Date of publication of application: **12.08.2026**
(21) Application number: 24886344.1
(22) Date of filing: 01.11.2024
(51) Int. Cl.: H04W 76/10, H04W 24/04, H04L 41/0894, H04L 41/0695, H04W 8/26, H04W 48/18, G06N 3/08

(54) **METHOD AND APPARATUS FOR PROCESSING APPLICATION FUNCTION REQUEST**

(30) Priority: 03.11.2023 KR 20230151114
(71) Applicant: Samsung Electronics Co., Ltd., Suwon-si, Gyeonggi-do 16677 (KR)
(72) Inventor: KIM, Hyesung, Suwon-si Gyeonggi-do 16677 (KR)
(74) Representative: HGF
(86) International application number: PCT/KR2024/017037
(87) International publication number: WO 2025/095673

(57) **Abstract**

The present disclosure relates to a 5G or 6G communication system for supporting higher data transmission rates. Disclosed is a method for a session management function (SMF) supporting edge relocation in a wireless communication system. The method may comprise the steps in which: the SMF receives, from a policy control function (PCF), an SM policy including a simultaneous connection request to a source protocol data unit (PDU) session anchor (PSA) and a target PSA during the edge relocation; the SMF determines whether simultaneous connection to the source PSA and the target PSA is impossible during the edge relocation; and the SMF transmits a notification that the SM policy cannot be applied to an application function (AF) on the basis of the determination.

## Description

### [Technical Field]

The disclosure relates to a wireless communication system, and more particularly, to a method and device for processing a request of an external application function in a mobile communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Detailed Description of the Invention]

### [Technical Problem]

In a wireless communication system, an application function (AF) may determine whether an AF request operation has been successfully performed based on whether request information in a core network has been successfully stored in a unified data repository (UDR). An AF request is generated as a policy and delivered to a network function, but information on whether an operation of the network function is performed according to the AF request is not provided to the AF. For example, information included in an AF traffic influence request is delivered to a session management function (SMF) as an SM policy, and information on whether session management has been performed based on the request information is not provided to the AF. Further, AF request-related information that has not been approved by a policy control function (PCF) or has been determined not to be applied by the SMF may be unnecessarily stored in the UDR.

The disclosure proposes a method and device for processing a request of an AF that affects a policy related to a terminal receiving a service through a wireless communication system.

The disclosure proposes a method and device for providing information to the AF on whether an AF request related to a terminal service has been set as policy information that affects an operation of a network function and applied so that a network operates as intended.

The disclosure proposes a method and device for managing application data generated in the UDR due to an AF request.

### [Technical Solution]

In a method of a session management function (SMF) supporting edge relocation in a wireless communication system according to an embodiment of the disclosure, the method may include receiving, by the SMF from a policy control function (PCF), an SM policy including a request for simultaneous connectivity to a source protocol data unit (PDU) session anchor (PSA) and a target PSA during edge relocation; determining, by the SMF, whether simultaneous connectivity to the source PSA and the target PSA is unavailable during edge relocation; and transmitting, by the SMF to an application function (AF), a notification of inapplicability of the SM policy based on the determination.

A session management function (SMF) device supporting edge relocation in a wireless communication system according to an embodiment of the disclosure includes a transceiver; and a processor controlling the transceiver. The processor may be configured to receive, from a policy control function (PCF), an SM policy including a request for simultaneous connectivity to a source protocol data unit (PDU) session anchor (PSA) and a target PSA during edge relocation, determine whether simultaneous connectivity to the source PSA and the target PSA is unavailable during edge relocation, and transmit, to an application function (AF), a notification of inapplicability of the SM policy, based on the determination.

A method by a network entity of a wireless communication system according to an embodiment of the disclosure may include receiving, from a second network entity, a request message for traffic influence, storing information included in the request message in a third network entity and transmitting, to the second network entity, a response message to the request message, and receiving, from a fourth network entity, a result notification message for the request message and transmitting, to the second network entity, the result notification message.

A network entity of a wireless communication system according to an embodiment of the disclosure may include a transceiver and a processor controlling the transceiver. The processor may be configured to: receive, from a second network entity, a request message for traffic influence, store information included in the request message in a third network entity and transmit, to the second network entity, a response message to the request message, and receive, from a fourth network entity, a result notification message for the request message and transmit, to the second network entity, the result notification message.

### [Brief Description of Drawings]

FIG. 1 is a block diagram illustrating an example configuration of a wireless communication system according to an embodiment of the disclosure.
FIG. 2 is a view illustrating a method of providing whether an AF request is applied to an AF according to an embodiment of the disclosure.
FIG. 3 is a view illustrating a method of removing AF request-related information from a UDR according to an embodiment of the disclosure.
FIG. 4 is a block diagram illustrating a configuration of a UE according to an embodiment of the disclosure.
FIG. 5 is a block diagram illustrating a configuration of a network entity according to an embodiment of the disclosure.

### [Mode for Carrying out the Invention]

Hereinafter, the operational principle of the disclosure is described below with reference to the accompanying drawings.

In describing the operational principle of the disclosure, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present disclosure is not limited to the embodiments disclosed herein, and various changes may be made thereto. The embodiments disclosed herein are provided only to inform one of ordinary skilled in the art of the category of the present disclosure. The present disclosure is defined only by the appended claims.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, according to the disclosure, a 'unit' may include elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

The terms described below are ones defined considering functions in the disclosure. Since the terms may be varied according to the user's or operator's intent or custom, their definitions should be determined according to the contents throughout the disclosure.

Terms referring to a network entity, terms referring to messages, terms referring to identification information, or the like used in the disclosure are exemplified for convenience of description. Thus, the disclosure is not limited to the terms, and the terms may be replaced with other terms denoting objects with equivalent technical meanings.

Hereinafter, for convenience, the disclosure uses terms and names defined in the 3rd generation partnership project (3GPP) 5G system specification, but is not limited by the terms and names and may be equally applied to a system conforming to other specifications.

The term "terminal" or "device" used in the disclosure may be referred to as a mobile station (MS), user equipment (UE), user terminal (UT), wireless terminal, access terminal (AT), terminal, subscriber unit, subscriber station (SS), wireless device, wireless communication device, wireless transmit/receive unit (WTRU), mobile node, mobile, or other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

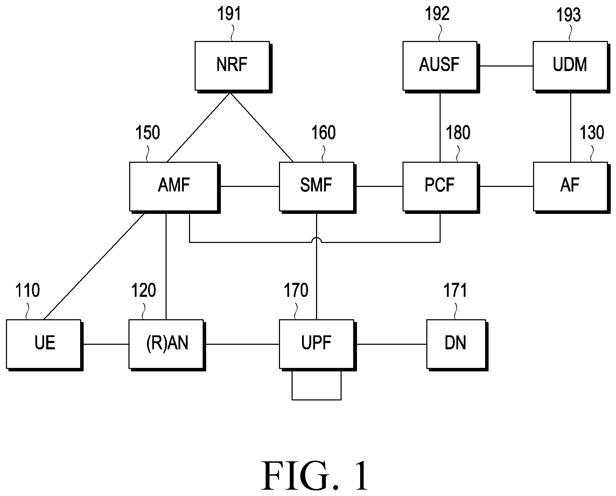

FIG. 1 is a block diagram illustrating an example configuration of a wireless communication system according to an embodiment of the disclosure. In the illustrated example, the wireless communication system may include a 5G mobile communication network.

Referring to FIG. 1, the 5G mobile communication network may be configured with a 5G UE 110, a radio access network (RAN) 120 (e.g., at least one of a base station, a gNB (5G nodeB), or an eNB (evolved nodeB)), and a 5G core network. The 5G core network may include various network functions (NFs). For example, the 5G core network may include at least one of network functions such as an access and mobility management function (AMF) 150, a session management function (SMF) 160, a policy control function (PCF) 180, an application function (AF) 130, a unified data management (UDM) 191, a user plane function (UPF) 170 responsible for data delivery to a data network (DN) 171, a network exposure function (NEF) 193, a unified data repository (UDR) 192, and an edge application server discovery function (EASDF).

Each NF supports the following functions.
- The AMF 150 provides a function for access and mobility management on a per-UE basis, and basically one UE may be connected to one AMF.
- The DN 171 refers to, e.g., an operator service, Internet access, or third party service. The DN 171 may transmit a downlink protocol data unit (PDU) to the UPF 170 or receive a PDU transmitted from UE 110 from the UPF 170.
- The PCF 180 provides a function of receiving information on a packet flow from an application server and determining a policy for mobility management, session management, or the like. Specifically, the PCF 180 may support functions such as a unified policy framework support for controlling network operation, provision of policy rules so that control plane function(s) (e.g., the AMF 150, the SMF 160, etc.) may enforce the policy rules, and front end implementation for accessing relevant subscription information for policy determination in the user data repository (UDR) 192.
- The SMF 160 provides a session management function and, when the UE 110 has multiple sessions, each session may be managed by a different SMF.
- The UDM 191 may store subscription data, policy data, or the like of a user.
- The UPF 170 delivers a downlink PDU received from the DN 171 to the UE 110 via the (R)AN 120, and may deliver an uplink PDU received from the UE 110 via the (R)AN 120 to the DN 171.
- The AF 130 may interact with a 3GPP core network for service provision (e.g., supporting functions such as application influence on traffic routing, access to the network exposure function, interaction with a policy framework for policy control, etc.).
- The NEF 193 may provide access and use of a service provided by a core network to the AF 130 or other network functions. For example, the AF 130 may transmit a policy control request to the PCF 180 or the UDR 192 through the NEF 193.

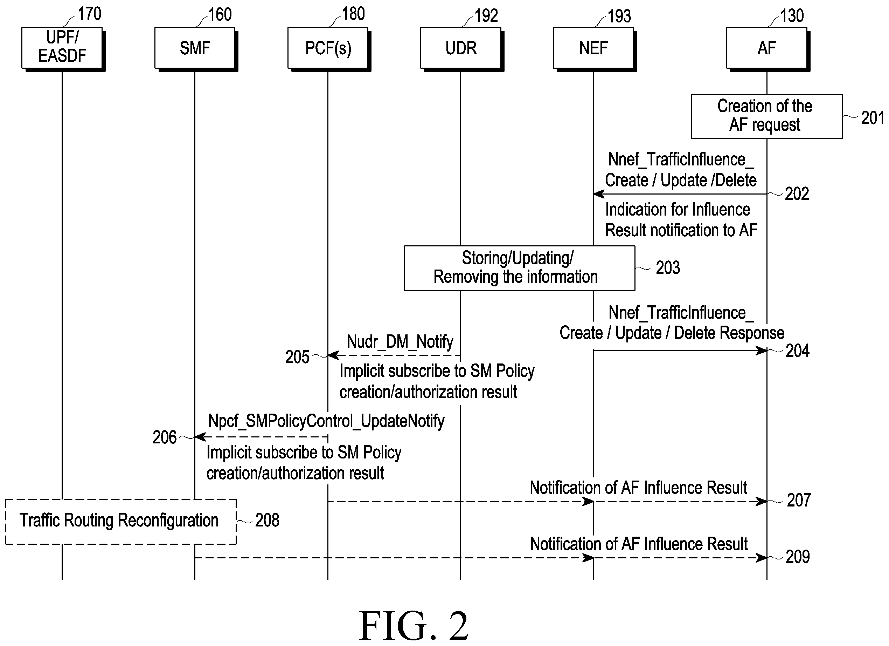

FIG. 2 is a view illustrating a method of providing whether an AF request is applied to an AF according to an embodiment of the disclosure.

Referring to FIG. 2, in operation 201, the AF 130 may generate an AF request message. The PCF 180 may subscribe to the UDR 192 in advance to receive a notification message when new creation or change of information on an AF request occurs. For example, the PCF 180 may subscribe to the following information.

### (Data Set = Application Data; Data Subset = AF traffic influence request information, Data Key = S-NSSAI and/or DNN and/or Internal Group Identifier or SUPI)

In operation 202, the AF 130 may transmit a traffic influence request message (Nnef_Trafficinfluence_Create/Update/Delete) to the NEF 193. The traffic influence request message may include at least one of the following information.
- An internet protocol (IP) address of the UE 110
- An identifier of the UE 110
- A traffic description (a combination of a deep neural network (DNN) and optional single network slice selection assistance information (S-NSSAI), an application identifier, or traffic filtering information)
- An AF service identifier
- A data network application identifier (DNAI) list
- An AF transaction identifier
- A UE IP address preservation indication
- Information on AF subscription to corresponding SMF events
- Information for edge application server (EAS) IP replacement in 5GC
- A user plane latency requirement
- An indication for simultaneous connectivity over the source and target PDU session anchor (PSA) at edge relocation

Further, in operation 202, the AF 130 may transmit an indicator for an AF request and/or an influence result notification required and a notification target address to the NEF 193. The indicator may be used for the purpose of requesting to notify a result on whether the AF request has actually been applied to a network function. The AF 130 may transmit an event ID for AF request/influence result notification in the AF subscription to corresponding SMF events to the NEF 193 by including the event ID in the AF request message for the same purpose. Further, using various parameters, the AF 130 may request a core network function to notify a result of whether each request is applied.

In operations 203 and 204, the NEF 193 may store the information received from the AF 130 in operation 202 in the UDR 192 and transmit a response message to the AF 130. The NEF 193 may store the information received from the AF 130 as application data in the UDR 192. The NEF 193 may store the indication for AF request/influence result notification required, the notification target address, or the event ID for AF request/influence result notification together with the information received from the AF 130 in the UDR 192.

In operation 205, the PCF 180 may be notified of AF request-related information from the UDR 192. When the indication for AF request/influence result notification required, the notification target address, or the event ID for AF request/influence result notification is stored as application data, the UDR 192 may provide implicit subscribe to SM Policy creation/authorization result information including the indication for AF request/influence result notification required, the notification target address, or the event ID for AF request/influence result notification and the notification target address to the PCF 180.

In operation 206, the PCF 180 may generate and authorize an SM policy using the information received from the UDR 192. The PCF 180 may transmit the generated SM policy to the SMF 160 including the implicit subscribe to SM Policy setup result and the notification target address in the generated SM policy. This may be for notifying the AF 130 of a result on whether the SM policy generated and delivered by the PCF 180 has been successfully applied to a user plane by the SMF 160.

When the PCF 180 fails to generate an SM policy based on the information received from the UDR 192 in operation 205, if the indication for AF request/influence result notification required is included in the information received from the UDR 192 and the PCF 180 has received the implicit subscribe to SM Policy creation/authorization result, in operation 207, the PCF 180 may notify the AF 130 of a result on whether the SM policy is applied through the NEF 193. For example, when an SM policy is generated based on an AF request including the indication for simultaneous connectivity over the source and target PSA at edge relocation, if it is determined that a session and service continuity mode (SSC mode) 3 of the UE is not supported or an operation related to session breakout is not possible based on subscription data or the like, the SM policy for supporting the simultaneous connectivity over the source and target PSA at edge relocation may not be generated. In this case, the PCF 180 may transmit a notification of AF influence result including information indicating inapplicability or application failure of the SM policy to the AF 130.

In operation 208, the SMF 160 may receive an SM policy generated according to an AF request from the PCF 180 and perform a user plane path configuration such as traffic routing reconfiguration based on the SM policy.

In operation 209, when the SMF 160 recognizes that the SM policy is not applicable in operation 208, the SMF 160 may notify the PCF 180 and the AF 130 of this. The SMF 130 may transmit a notification of AF influence result including information indicating inapplicability or application failure of the SM policy to the AF 130. For example, when the SMF 160 receives an SM policy including a request for supporting simultaneous connectivity over the source and target PSA at edge relocation from the PCF 180 and performs a UP path configuration, but a new UPF is selected due to location movement of the UE or the like, supporting the simultaneous connectivity over the source and target PSA at edge relocation may not be possible. In this case, the SMF 160 may notify the PCF 180 and the AF 130 of inapplicability information on the SM policy.

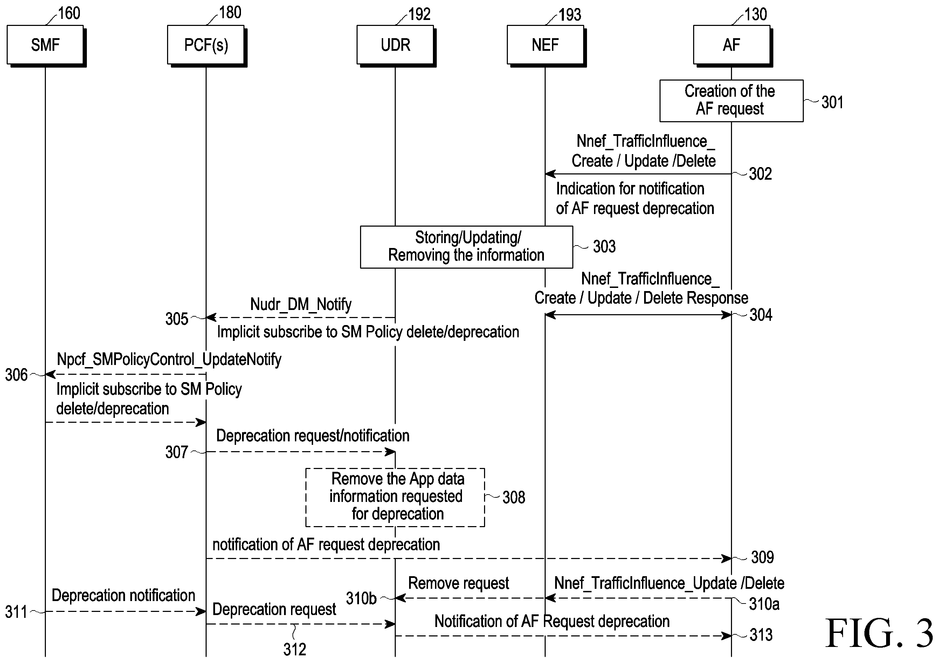

FIG. 3 is a view illustrating a method of removing AF request-related information from a UDR according to an embodiment of the disclosure.

Referring to FIG. 3, in operation 301, the AF 130 may generate an AF request message. The PCF 180 may subscribe to the UDR 192 in advance to receive a notification message when new creation or change of information on an AF request occurs. For example, the PCF 180 may subscribe to the following information.

### (Data Set = Application Data; Data Subset = AF traffic influence request information, Data Key = S-NSSAI and/or DNN and/or Internal Group Identifier or SUPI)

In operation 302, the AF 130 may transmit a traffic influence request message to the NEF 193. The traffic influence request message may include at least one of the following information.
- An internet protocol (IP) address of the UE 110
- An identifier of the UE 110
- A traffic description (a combination of a deep neural network (DNN) and optional single network slice selection assistance information (S-NSSAI), an application identifier, or traffic filtering information)
- An AF service identifier
- A data network application identifier (DNAI) list
- An AF transaction identifier
- A UE IP address preservation indication
- Information on AF subscription to corresponding SMF events
- Information for edge application server (EAS) IP replacement in 5GC
- A user plane latency requirement
- An indication for simultaneous connectivity over the source and target PDU session anchor (PSA) at edge relocation

Further, in operation 302, the AF 130 may transmit an indicator for notification of AF request deprecation to the NEF 193. The indicator may be used to receive a notification when generated application data or information on an SM policy generated due to an AF request becomes invalid without being applied to a network function (deprecated application data). The AF 130 may transmit an event ID for AF request/application data deprecation in the AF subscription to corresponding SMF events to the NEF 193 by including the event ID in the AF request message for the same purpose. Further, using various parameters, the AF 130 may request a core network function to notify a result of whether each request is applied.

In operations 303 and 304, the NEF 193 may store the information received from the AF 130 in operation 302 in the UDR 192 and transmit a response message to the AF 130. The NEF 193 may store the information received from the AF 130 as application data in the UDR 192. The NEF 193 may store the indication for AF request/influence result notification required, the notification target address, or the event ID for AF request/influence result notification together with the information received from the AF 130 in the UDR 192.

In operation 305, the PCF 180 may be notified of AF request-related information from the UDR 192. When the indication for AF request/influence result notification required, the notification target address, or the event ID for AF request/influence result notification is stored as application data, the UDR 192 may provide implicit subscribe to SM Policy creation/authorization result information including the indication for AF request/influence result notification required, the notification target address, or the event ID for AF request/influence result notification and the notification target address to the PCF 180.

In operation 306, the PCF 180 may generate and authorize an SM policy using the information received from the UDR 192. The PCF 180 may transmit the generated SM policy to the SMF 160 including the implicit subscribe to SM Policy setup result and the notification target address in the generated SM policy. This may be for notifying the UDR 192 or the NEF 193 when the SM policy generated and delivered by the PCF 180 has been successfully applied to a user plane by the SMF 160, but subsequently the SM policy is no longer applicable and it is determined that the SM policy will not be applied in the future.

When an SM policy generated by the PCF 180 based on the information received from the UDR 192 in operation 305 is no longer valid, in operation 307, the PCF 180 may transmit an application data deprecation request or an application data deprecation notification message to the UDR 192.

When the UDR 192 receives the application data deprecation request or the application data deprecation notification message from the PCF 180, in operation 308, the UDR 192 may delete or deprecate the application data information and transmit a notification message to a network function entity (e.g., the PCF 180, the SMF 160, etc.) that has subscribed to a service to be notified when a change occurs in the application data.

In operation 309, the PCF 180 may transmit an application data deprecation notification to the AF 130 through the NEF 193.

In operation 310a, when the AF 130 receives a notification such as the application data deprecation notification for a previously transmitted AF request from the PCF 180 through the NEF 193, the AF 130 may transmit a message to the NEF 193 requesting deletion of AF request-related information requested by the AF 130 and, in operation 310b, the NEF 193 may transmit a deletion request message for the information requested by the AF 130 to the UDR 192 according to the request of the AF 130.

Independently of operations 307 to 309, in operation 311, the SMF 160 may transmit a deprecation request or a deprecation notification message to the PCF 180. For example, when traffic routing has been configured by applying the SM policy received from the PCF 180 in operations 307 to 309, but the SM policy is no longer valid due to a change in subscription data of the UE or the UE entering a traffic routing unavailable area due to movement of the UE, the SMF 160 may transmit a deprecation request or a deprecation notification message for the received SM policy to the PCF 180.

When the PCF 180 receives a deprecation request or a deprecation notification message for an SM policy from the SMF 160, in operation 312, the PCF 180 may specify the application data used to generate the SM policy and transmit a deprecation request or a deprecation notification message to the UDR 192. After the UDR 192 removes or deprecates the application data, in operation 313, the UDR 192 may transmit a notification of AF request deprecation message for the occurrence of the event to the AF 130. The notification of AF request deprecation message transmitted to the AF 130 in operation 313 may be transmitted through the NEF 193.

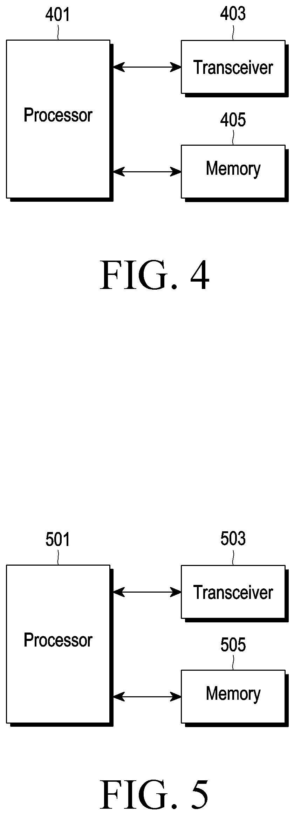

FIG. 4 is a block diagram illustrating a configuration of a UE according to an embodiment of the disclosure.

Referring to FIG. 4, the UE (e.g., the UE 110 of FIG. 1) may include at least one of a processor 401, a transceiver 403, or memory 405. The UE is not limited to a form including only the illustrated components, and the UE may include more components than the illustrated components or may include fewer components.

According to an embodiment of the disclosure, the transceiver 403 may transmit/receive a signal to/from at least one network entity (e.g., the RAN 120, the AMF 150, and/or at least one other UE). A signal transmitted and received between the network entity and the UE may include at least one of control information or data. The transceiver 403 may receive a signal through a wireless channel and deliver the signal to the processor 601, and may transmit a signal received from the processor 401 through a wireless channel.

According to an embodiment of the disclosure, the processor 401 may control an operation of the UE to perform an operation corresponding to at least one of the embodiments of FIGS. 2 and 3.

Of course, the processor 401, the transceiver 403, and the memory 405 do not necessarily need to be implemented as separate modules, and may be implemented as a single module such as a single chip. The processor 401 and the transceiver 403 may be electrically connected. The processor 401 may include an application processor (AP) and/or a communication processor (CP).

According to an embodiment of the disclosure, the memory 405 may store data such as a basic program, an application program, setting information, or the like for an operation of the UE. The memory 405 may provide the stored data according to a request of the processor 401. The memory 405 may be configured with a storage medium or a combination of storage media such as a read only memory (ROM), a random access memory (RAM), a hard disk, a compact disc read only memory (CD-ROM), and a digital versatile disc (DVD). The memory 405 may include a plurality of memories. The processor 401 may perform at least one of operations corresponding to the embodiments of the disclosure based on a program for performing at least one of operations corresponding to the embodiments of the disclosure stored in the memory 405.

FIG. 5 is a block diagram illustrating a configuration of a network entity according to an embodiment of the disclosure.

Referring to FIG. 5, a network entity (e.g., at least one of the UPF/EASDF 170, the SMF 160, the PCF 180, the RAN 120, the AMF 150, the UDR 192, the NRF 193, or the AF 130) may include at least one of a processor 501, a transceiver 503 including a transmitter and/or a receiver, or memory 505. The network entity is not limited to a form including only the illustrated components, and the network entity may include more components than the illustrated components or may include fewer components.

According to an embodiment of the disclosure, the transceiver 503 may transmit/receive a signal to/from at least one other network entity (e.g., at least one of the UPF/EASDF 170, the SMF 160, the PCF 180, the RAN 120, the AMF 150, the UDR 192, the NRF 193, or the AF 130) and/or at least one UE (e.g., the UE 110). A signal transmitted and received between the at least one other network entity and/or the at least one UE may include at least one of control information or data. When the network entity illustrated in FIG. 5 is a base station (e.g., the RAN 120), the transceiver 503 may include a transceiver for transmitting/receiving a wireless signal to/from a UE (e.g., the UE 110), and a transceiver or a communication interface for transmitting/receiving a signal to/from another network entity of a core network.

According to an embodiment of the disclosure, the processor 501 may control the network entity to perform at least one of operations corresponding to the embodiments of FIGS. 2 to 3. Of course, the processor 501, the transceiver 503, and the memory 505 do not necessarily need to be implemented as separate modules, and may be implemented as a single module such as a single chip. The processor 501 and the transceiver 503 may be electrically connected. The processor 501 may include an AP and/or a CP.

According to an embodiment of the disclosure, the memory 505 may store data such as a basic program, an application program, setting information, or the like for an operation of the network entity. The memory 505 may provide the stored data according to a request of the processor 501. The memory 505 may be configured with a storage medium or a combination of storage media such as a ROM, a RAM, a hard disk, a CD-ROM, and a DVD. The memory 505 may include a plurality of memories. The processor 501 may perform at least one of operations corresponding to the embodiments of the disclosure based on a program for performing at least one of operations corresponding to the embodiments of the disclosure stored in the memory 505.

It should be noted that the system configuration diagrams, method example diagrams, device configuration diagrams, or the like illustrated in FIGS. 1 to 5 are not intended to limit the scope of the disclosure. In other words, all the configurations or operations illustrated in FIGS. 1 to 5 should not be construed as essential components to practice the present invention, and the present invention may be rather implemented with only some of the components without departing from the gist of the present invention.

The methods according to the embodiments described in the specification or claims of the disclosure may be implemented in hardware, software, or a combination of hardware and software.

When implemented in software, there may be provided a computer readable storage medium storing one or more programs (software modules). One or more programs stored in the computer readable storage medium are configured to be executed by one or more processors in an electronic device. One or more programs include instructions that enable the electronic device to execute methods according to the embodiments described in the specification or claims of the disclosure.

The programs (software modules or software) may be stored in random access memories, non-volatile memories including flash memories, read-only memories (ROMs), electrically erasable programmable read-only memories (EEPROMs), magnetic disc storage devices, compact-disc ROMs, digital versatile discs (DVDs), or other types of optical storage devices, or magnetic cassettes. Or, the programs may be stored in memory constituted of a combination of all or some thereof. As each constituting memory, multiple ones may be included.

The programs may be stored in attachable storage devices that may be accessed via a communication network, such as the Internet, Intranet, local area network (LAN), wide area network (WLAN), or storage area network (SAN) or a communication network configured of a combination thereof. The storage device may connect to the device that performs embodiments of the disclosure via an external port. A separate storage device over the communication network may be connected to the device that performs embodiments of the disclosure.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present disclosure have been described above, various changes may be made thereto without departing from the scope of the present disclosure. Thus, the scope of the disclosure should not be limited to the above-described embodiments, and should rather be defined by the following claims and equivalents thereof.

## Claims

1. A method of a session management function (SMF) supporting edge relocation in a wireless communication system, the method comprising:
receiving, by the SMF from a policy control function (PCF), an SM policy including a request for simultaneous connectivity to a source protocol data unit (PDU) session anchor (PSA) and a target PSA during edge relocation;
determining, by the SMF, whether simultaneous connectivity to the source PSA and the target PSA is unavailable during edge relocation; and
transmitting, by the SMF to an application function (AF), a notification of inapplicability of the SM policy, based on the determination.

2. The method of claim 1, further comprising:
performing, by the SMF, a user plane path configuration with a user plane function (UPF) based on the SM policy.

3. The method of claim 2, wherein the user plane path configuration includes traffic routing reconfiguration.

4. A session management function (SMF) device supporting edge relocation in a wireless communication system, the device comprising:
a transceiver; and
a processor controlling the transceiver, wherein the processor is configured to:
receive, from a policy control function (PCF), an SM policy including a request for simultaneous connectivity to a source protocol data unit (PDU) session anchor (PSA) and a target PSA during edge relocation,
determine whether simultaneous connectivity to the source PSA and the target PSA is unavailable during edge relocation, and
transmit, to an application function (AF), a notification of inapplicability of the SM policy based on the determination.

5. The device of claim 4, wherein the processor is further configured to perform a user plane path configuration with a user plane function (UPF) based on the SM policy.

6. The device of claim 5, wherein the user plane path configuration includes traffic routing reconfiguration.

7. A method of operating a first network entity in a wireless communication system, the method comprising:
receiving, from a second network entity, a request message for traffic influence;
storing information included in the request message in a third network entity and transmitting, to the second network entity, a response message to the request message; and
receiving, from a fourth network entity, a result notification message for the request message and transmitting, to the second network entity, the result notification message.

8. The method of claim 7, wherein the information included in the request message includes an indicator requesting a result notification for the traffic influence, and wherein the result notification message includes information on whether a policy generated based on the information stored in the third network entity is applied.

9. The method of claim 8, wherein the information included in the request message further includes target address information for the result notification of the traffic influence.

10. The method of claim 7, wherein the information included in the request message includes an indicator requesting a notification for deprecation of the traffic influence, and wherein the result notification message includes information on the deprecation of the information stored in the third network entity.

11. The method of claim 7, wherein the first network entity is a network exposure function (NEF), the second network entity is an application function (AF), the third network entity is a unified data repository (UDR), and the fourth network entity is a policy control function (PCF).

12. A first network entity in a wireless communication system, the first network entity comprising:
a transceiver; and
a processor controlling the transceiver, wherein the processor is configured to:
receive, from a second network entity, a request message for traffic influence;
store information included in the request message in a third network entity and transmit, to the second network entity, a response message to the request message; and
receive, from a fourth network entity, a result notification message for the request message and transmit, to the second network entity, the result notification message.

13. The first network entity of claim 12, wherein the information included in the request message includes an indicator requesting a result notification for the traffic influence, and wherein the result notification message includes information on whether a policy generated based on the information stored in the third network entity is applied.

14. The first network entity of claim 13, wherein the information included in the request message further includes target address information for the result notification of the traffic influence.

15. The first network entity of claim 12, wherein the information included in the request message includes an indicator requesting a notification for deprecation of the traffic influence, and wherein the result notification message includes information on the deprecation of the information stored in the third network entity.
